# EUROPEAN PATENT APPLICATION

(11) **EP 4 280 353 A1**
(43) Date of publication of application: **22.11.2023**
(21) Application number: 22794750.4
(22) Date of filing: 21.04.2022
(51) Int. Cl.: H01M 50/166, H01M 50/171

(54) **END COVER MOUNTING APPARATUS AND MOUNTING METHOD FOR BATTERY, AND BATTERY PRODUCTION LINE**

(30) Priority: 29.04.2021 CN 202110471731
(71) Applicant: Guangdong Lyric Robot Automation Co., Ltd., Huicheng District Huizhou Guangdong 516000 (CN)
(72) Inventor: WANG, Feng, Huizhou, Guangdong 516000 (CN); FANG, Nian, Huizhou, Guangdong 516000 (CN); XIONG, Xuefei, Huizhou, Guangdong 516000 (CN)
(74) Representative: Purdylucey Intellectual Property
(86) International application number: PCT/CN2022/088259
(87) International publication number: WO 2022/228279

(57) **Abstract**

The invention is applied in the technical field of battery production, and particularly relates to a battery end cover mounting device and mounting method, and a battery production line. The battery end cover mounting device includes a manipulator; and a rubberizing mechanism provided on a transfer path of an end cover, the rubberizing mechanism being configured for applying a rubber strip between the end cover with a battery which are assembled. The battery production line comprises a manipulator and the battery end cover mounting device above. The battery end cover mounting method comprises: clamping an end cover by a first clamping component, and transferring the end cover to an assembling mechanism through a first transfer apparatus; rotating an assembly opening of the end cover to be aligned with a tab; clamping the end cover by a second clamping component, and transferring the end cover to an assembly opening of the battery through a second transfer apparatus for assembly; and fixing the end cover and the battery through a rubber strip by the rubberizing mechanism, so that an end cover for accommodating the bent tab of the battery can be quickly mounted at the tab, thus effectively preventing short circuit caused by contact between the tab and a shell, and effectively preventing the battery from being damaged.

## Description

### TECHNICAL FIELD

The disclosure is applied in the technical field of battery production, and particularly relates to a battery end cover mounting device and mounting method, and a battery production line.

### BACKGROUND

During battery production, battery tab usually needs to be bent. However, due to a limited space inside the battery, there is insufficient space for the bent tab inside the battery, which leads to the contact between the tab and an aluminum shell of the battery, resulting in short circuit, and finally damaging the battery.

### SUMMARY

The disclosure aims to solve at least one of the technical problems in the existing technology, and provides a battery end cover mounting device and mounting method, and a battery production line, so that an end cover for accommodating a bent tab of a battery can be quickly mounted at the tab, thus effectively preventing short circuit caused by contact between the tab and a shell, and effectively preventing the battery from being damaged.

In a first aspect, the disclosure provides a battery end cover mounting device, which comprises:
a manipulator configured for grabbing an end cover and assembling the end cover on a battery; and
a rubberizing mechanism provided on a transfer path of the end cover, wherein the rubberizing mechanism is configured for applying a rubber strip between the end cover with the battery which are assembled.

The technical solution above at least has the following advantages or beneficial effects. During working, the manipulator takes out the end cover and sends the end cover to an assembly opening of the battery for assembly, and the rubberizing mechanism applies a rubber strip between the assembled end cover and the battery, so that the end cover capable of accommodating a bent tab of a battery can be quickly mounted at the tab, thus effectively preventing short circuit caused by contact between the tab and a shell, and preventing the battery from being damaged.

As a further improvement to the technical solution of the disclosure, the manipulator comprises a material taking mechanism, the material taking mechanism is provided with a first transfer apparatus and a first clamping component, the first clamping component is mounted on the first transfer apparatus, and the first clamping component is configured for clamping the end cover.

As a further improvement to the technical solution of the disclosure, the manipulator further comprises an assembling mechanism provided at one side of the material taking mechanism, the assembling mechanism is provided with a second transfer apparatus and a second clamping component, the second clamping component is mounted on the second transfer apparatus, and the second clamping component is configured for assembling the end cover clamped by the first clamping component onto the battery.

As a further improvement to the technical solution of the disclosure, the rubberizing mechanism comprises a third transfer apparatus, a rubberizing module is provided on the third transfer apparatus, the rubberizing module comprises a first suction block, a second suction block and a telescopic ejector block, the telescopic ejector block is provided between the first suction block and the second suction block, and the first suction block and the second suction block are capable of being close to or far away from each other. Before the end cover presses the telescopic ejector block, the first suction block and the second suction block may be far away from each other, which is convenient for the end cover and the battery to enter between the first suction block and the second suction block, and when the end cover presses the telescopic ejector block in place, the first suction block and the second suction block move closely to each other, so that a rubber strip is stuck to the end cover and the battery.

As a further improvement to the technical solution of the disclosure, a plurality of rubberizing modules are provided, the rubberizing modules are distributed at intervals, and two adjacent rubberizing modules are capable of being close to or far away from each other. In this way, a plurality of rubber strips may be stuck to the end cover and the battery at the same time, so that on one hand, it is ensured that the end cover is not easy to shift before rubberizing, with good stability, and on the other hand, rubberizing efficiency is improved.

As a further improvement to the technical solution of the disclosure, the first clamping component is mounted on the first transfer apparatus through a driving apparatus, and the first clamping component is driven by the driving apparatus to drive the end cover to rotate, so that an assembly opening of the end cover faces the tab. In this way, it is convenient for the assembling mechanism to assemble the end cover, and assembly time is saved.

As a further improvement to the technical solution of the disclosure, a pressing plate is further provided on the first clamping component, and the pressing plate is configured for keeping the end cover horizontal before the first clamping component clamps the end cover, so that it is ensured that the end cover clamped by the first clamping component remains horizontal.

As a further improvement to the technical solution of the disclosure, the battery end cover mounting device further comprises a material feeding mechanism provided at one side of the material taking mechanism, wherein a calibration mechanism is provided between the material taking mechanism and the material feeding mechanism, the calibration mechanism comprises a driving component and a calibration plate, the calibration plate is mounted at a power output end of the driving component, and the driving component drives the calibration plate, so that the calibration plate pushes the material feeding mechanism to be directly opposite to the material taking mechanism, so that it is ensured that the material taking mechanism is capable of accurately clamping the end cover in a material frame, and material taking efficiency of the material taking mechanism is effectively improved.

In a second aspect, the disclosure further provides a battery production line, which comprises a conveying line and the battery end cover mounting device according to any one of the solutions above. According to the device, the end cover for accommodating the bent tab of the battery can be quickly mounted at the tab, thus effectively preventing short circuit caused by contact between the tab and the shell.

In a third aspect, the disclosure further provides a battery end cover mounting method, which comprises:
clamping an end cover by a first clamping component, and transferring the end cover to an assembling mechanism through a first transfer apparatus;
clamping the end cover by a second clamping component of the assembling mechanism, and transferring the end cover to an assembly opening of the battery through a second transfer apparatus for assembly;
driving a rubberizing module of a rubberizing mechanism by a third transfer apparatus to be close to the assembled end cover and the battery, and making the end cover and the battery jointly enter between a first suction block and a second suction block, so that a telescopic ejector block is in pressing contact with the end cover; and
making the telescopic ejector block contract under a counter-acting force of the end cover, making the first suction block and the second suction block close to each other at the same time, and sticking a rubber strip between the end cover and the battery.

This mounting method has higher assembly efficiency and assembly accuracy, and makes the connection between the end cover and the battery stronger.

### BRIEF DESCRIPTION OF THE DRAWINGS

The disclosure is further described hereinafter with reference to the drawings.
FIG. 1 is a schematic structural diagram according to an embodiment of the disclosure;
FIG. 2 is a schematic diagram showing the structural relationship between a material frame, a material feeding turntable and a material ejection mechanism in the embodiment shown in FIG. 1;
FIG. 3 is a schematic structural diagram of a material taking mechanism in the embodiment shown in FIG. 1;
FIG. 4 is a schematic diagram of a structural relationship between an assembling mechanism and a transition platform in the embodiment shown in FIG. 1;
FIG. 5 is a schematic structural diagram of a rubberizing mechanism in the disclosure; and
FIG. 6 is an enlarged partial view of a part A in FIG. 5.

### DETAILED DESCRIPTION

Specific embodiments of the disclosure will be described in detail in this part, preferred embodiments of the disclosure are shown in the drawings, and the drawings are intended to replenish the description in the written part of the specification with figures, so that people can intuitively and vividly understand each technical feature and the overall technical solutions of the disclosure, but it cannot be understood as a limitation to the scope of protection of the disclosure.

In the disclosure, if the direction (up, down, left, right, front and rear) is described, it is only for the convenience of description of the technical solutions of the disclosure, and it is not to indicate or imply that the indicated technical feature must have a specific orientation, and be constructed and operated in a specific orientation. Therefore, the direction described shall not be understood as limiting the disclosure.

In the disclosure, the meaning of "several" refers to being one or more, and the meaning of "a plurality of' refers to being two or more. The meanings of "greater than", "less than", "more than", etc., are understood as not including this number, while the meanings of "above", "below", "within", etc., are understood as including this number. In the description of the disclosure, if there are descriptions of "first" and "second", it is only for the purpose of distinguishing technical features, and shall not be understood as indicating or implying relative importance or implying the number of indicated technical features or implying the order of indicated technical features.

In the disclosure, the terms "arrangement", "installation", "connection", etc., shall be understood in a broad sense unless otherwise specifically defined. For example, they may be direct connection or indirect connection through an intermediate medium; may be fixed connection, removable connection or integrated connection; may be mechanical connection or electrical connection, or communication between each other; and may be communication inside two elements, or interaction between two elements. Those of ordinary skills in the art can reasonably determine the specific meanings of the above terms in the disclosure in combination with the specific contents of the technical solutions.

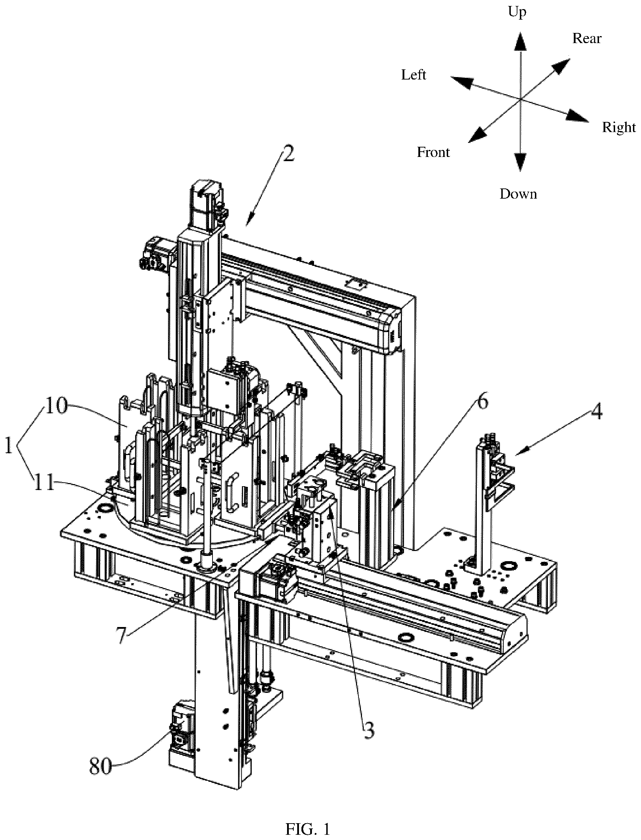

With reference to FIG. 1 to FIG. 5, the disclosure provides a battery end cover mounting device, which mainly comprises a manipulator and a rubberizing mechanism 5, wherein the manipulator is configured for grabbing an end cover and assembling the end cover on a battery, the rubberizing mechanism 5 is on a transfer path of the end cover, and the rubberizing mechanism 5 is configured for applying a rubber strip between the end cover with the battery which are assembled.

During working, the manipulator takes out the end cover and sends the end cover to an assembly opening of the battery for assembly, and the rubberizing mechanism applies a rubber strip between the assembled end cover and the battery, so that the end cover capable of accommodating a bent tab of a battery can be quickly mounted at the bent tab, thus effectively preventing short circuit caused by contact between the tab and a shell.

In some embodiments, the manipulator comprises a material taking mechanism 2, the material taking mechanism 2 is provided with a first transfer apparatus 20 and a first clamping component 21, the first clamping component 21 is mounted on the first transfer apparatus 20, and the first clamping component 21 is configured for clamping the end cover.

In other embodiments, the manipulator further comprises an assembling mechanism 3, wherein the assembling mechanism 3 is provided on the transfer path of the end cover, the assembling mechanism 3 is provided with a second transfer apparatus 30 and a second clamping component 31, the second clamping component 31 is mounted on the second transfer apparatus 30, and the second clamping component 31 is configured for assembling the end cover clamped by the first clamping component 21 onto the battery.

One side of the material taking mechanism 2 is further provided with a material feeding mechanism 1, the material feeding mechanism 1 comprises a material feeding turntable 11 and a plurality of material frames 10, the material frames 10 are annularly distributed on the material feeding turntable 11, the end cover is placed in the material frame 10, and the material feeding turntable 11 is rotatable to transfer the material frames 10 to positions directly opposite to the material taking mechanism 2.

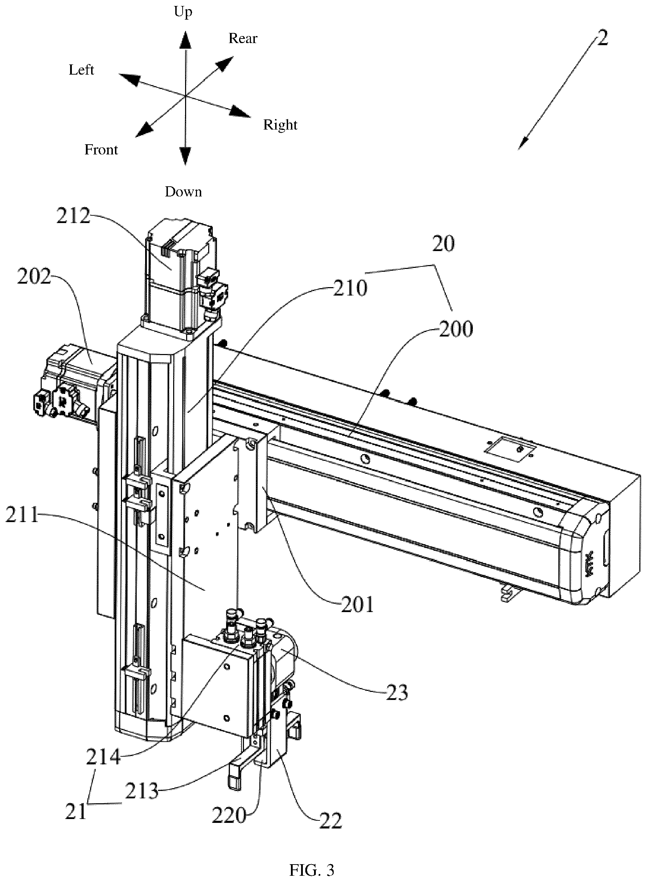

With reference to FIG. 3, the first transfer apparatus 20 comprises a first lifting guide rail 210 and a first traversing guide rail 200. A first lifting slider 211 and a first lifting cylinder 212 are mounted on the first lifting guide rail 210, and the first lifting cylinder 212 is configured for driving the first lifting slider 211 to slide on the first lifting guide rail 210. A first traversing cylinder 202 and a first traversing slider 201 are mounted on the first traversing guide rail 200, the first lifting guide rail 210 is fixed on the first traversing slider 201, and the first clamping component 21 is mounted on the first lifting slider 211.

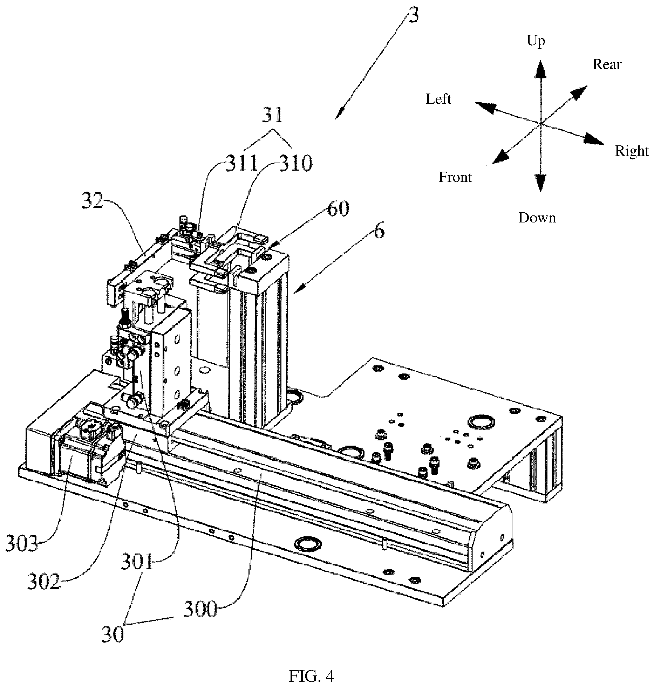

With reference to FIG. 4, the second transfer apparatus 30 comprises a second lifting cylinder 301 and a second traversing guide rail 300. A second traversing slider 302 and a second traversing cylinder 303 are mounted on the second traversing guide rail 300, and the second traversing cylinder 303 is configured for driving the second traversing slider 302 to slide on the second traversing guide rail 300. The second lifting cylinder 301 is mounted on the second traversing slider 302, the second clamping component 31 is mounted at a power output end of the second lifting cylinder 301 through a connecting member 32, and the second lifting cylinder 301 is configured for driving the second clamping component 31 to ascend and descend.

In order to facilitate the transportation of the end cover from the first clamping component 21 to the second clamping component 31, in some embodiments, a transition platform 6 is further provided on the transfer path of the end cover, and the transition platform 6 provides a temporary placement point for the end cover to be transported from the first clamping component 21 to the second clamping component 31.

Specifically, a clamping groove 60 is provided on the transition platform 6, and the clamping groove 60 is configured for placing the end cover. After the first clamping component 21 clamps the end cover, the end cover is sent to and placed in the clamping groove 60 by the first transfer apparatus 20, then the second clamping component 31 clamps the end cover from the clamping groove 60, and the end cover is sent to the assembly opening of the battery by the second transfer apparatus 30 for assembly.

With reference to FIG. 1 and FIG. 3, it should be noted that an assembly opening of the end cover placed in the material frame 10 is oriented downward, and in a process that the first clamping component 21 clamps the end cover from the material frame 10 and then sends the end cover to the transition platform 6, the assembly opening of the end cover may be rotated to be aligned with the tab, so that it is convenient for the second clamping component 31 to directly clamp the end cover for assembly. In order to realize this function, in the disclosure, the first clamping component 21 is mounted on the first transfer apparatus 20 through a driving apparatus 23, and the first clamping component 21 may drive the end cover to rotate under the driving of the driving apparatus 23, so that the assembly opening of the end cover faces the assembly opening of the battery.

Specifically, the driving apparatus 23 is mounted on the first lifting slider 211 through a mounting plate.

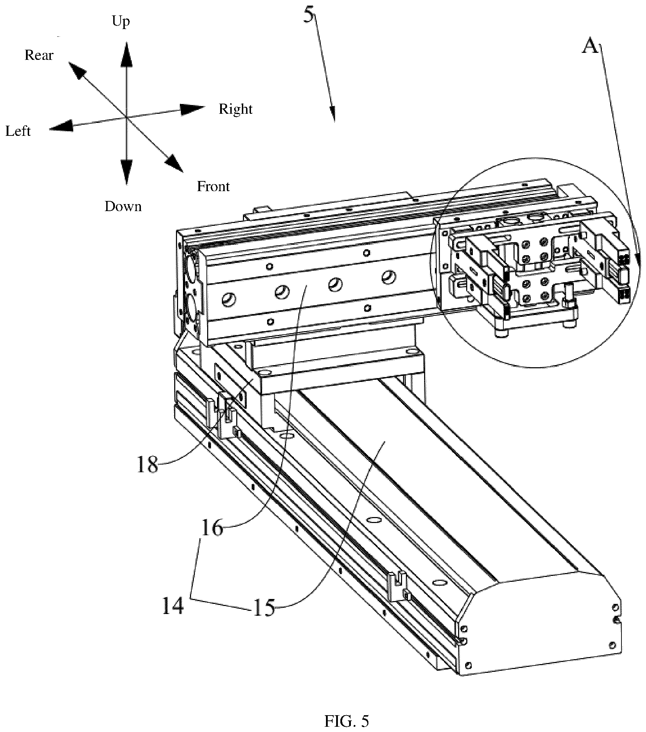

With reference to FIG. 1 and FIG. 5, in order to facilitate the rubberizing mechanism 5 to apply a rubber strip between the end cover and the battery subsequently, in the disclosure, an auxiliary fixture 4 is further provided on the transfer path of the end cover. When the second clamping component 31 transfers the end cover to the assembly opening of the battery to finish assembly, the auxiliary fixture 4 will clamp and position the tab, so as to avoid the end cover from being unable to be mounted due to the shift of the tab. When the end cover is assembled stably, the auxiliary fixture 4 will be withdrawn, so as to avoid hindering the subsequent assembly of the end cover.

With reference to FIG. 3, in some embodiments, a pressing plate 22 is provided on a side edge of the first clamping component 21, and the pressing plate 22 is configured for keeping the end cover horizontal before the first clamping component 21 clamps the end cover.

Specifically, the pressing plate 22 is driven by a pressing plate cylinder, an end portion of the pressing plate 22 is provided with a bending section 220 extending into a clamping range of the first clamping component 21, and the pressing plate 22 performs pressing contact on the end cover by the bending section 220 during descending. During working, the pressing plate cylinder may drive the pressing plate 22 to press down, so that the bending section 220 performs pressing contact on the end cover in the material frame 10 to keep the end cover horizontal, and then the first clamping component 21 performs a clamping action, so that it can be ensured that the end cover clamped by the first clamping component 21 remains horizontal.

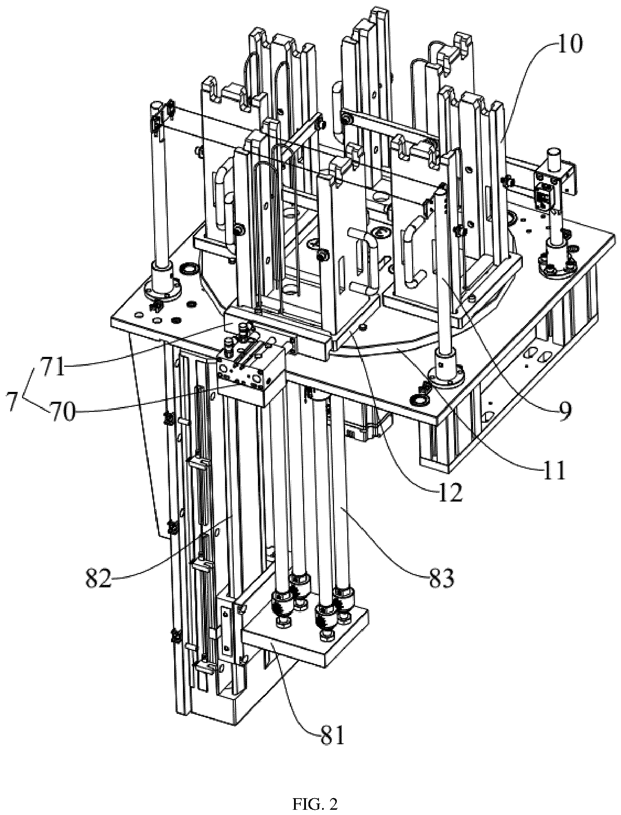

In order to ensure that the end cover can be accurately clamped after the first lifting slider drives the first clamping component 21 to extend into the material frame 10, it is necessary to maintain mutual alignment between the material taking mechanism 2 and the material feeding mechanism 1. However, the material feeding turntable 11 will not accurately stop at one side of the material taking mechanism 2 due to inertia and other reasons during the rotation. In order to solve this problem, with reference to FIG. 1 and FIG. 2, in the disclosure, a calibration mechanism 7 is provided between the material taking mechanism 2 and the material feeding mechanism 1, and the calibration mechanism 7 is capable of calibrating the material feeding mechanism 1 to be directly opposite to the material taking mechanism 2.

Specifically, the calibration mechanism 7 comprises a driving component 70 and a calibration plate 71. The calibration plate 71 is mounted at a power output end of the driving component 70, the material frame 10 is mounted on the material feeding turntable 11 through a connecting plate 12, and the driving component 70 is capable of driving the calibration plate 71, so that the calibration plate 71 is attached to a side edge of the connecting plate 12 in parallel, thus making the material feeding turntable 11 directly opposite to the material taking mechanism 2 under constraint of the calibration plate 71.

With reference to FIG. 3, in the disclosure, the first clamping component 21 comprises a clamping jaw 213 and a clamping jaw cylinder 214, and the clamping jaw cylinder 214 is capable of driving the clamping jaw 213 to perform opening and closing actions, thus realizing clamping and releasing functions.

With reference to FIG. 4, the second clamping component 31 comprises a driving cylinder 311 and two gripping jaws 310 provided at an interval in an up-down direction, and the driving cylinder 311 is capable of driving the two gripping jaws 310 to be close to or far away from each other, thus realizing clamping and releasing functions.

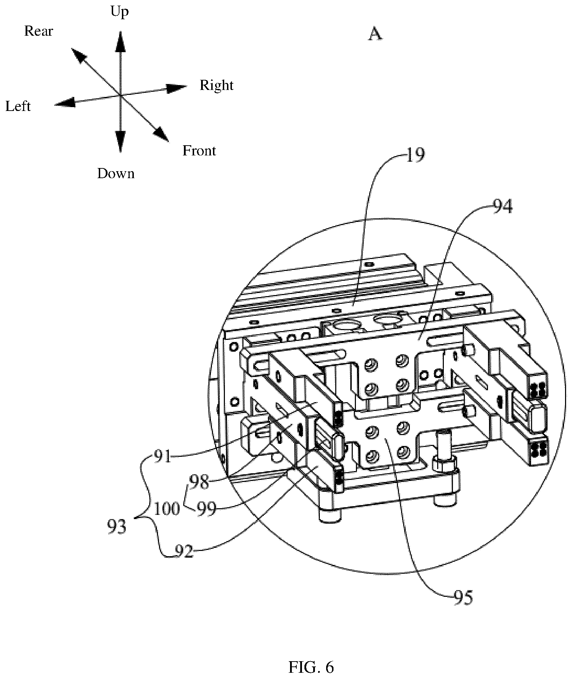

With reference to FIG. 5 and FIG 6, in some embodiments, the rubberizing mechanism 5 comprises a third transfer apparatus 14, a rubberizing module 93 is provided on the third transfer apparatus 14, and the rubberizing module 93 comprises a first suction block 91, a second suction block 92 and a telescopic ejector block 100. The first suction block 91 and the second suction block 92 are provided at an interval up and down, the telescopic ejector block 100 is provided between the first suction block 91 and the second suction block 92, and the first suction block 91 and the second suction block 92 are capable of being close to or far away from each other.

The third transfer apparatus 14 comprises a third traversing guide rail 15 and a fourth traversing guide rail 16. A third traversing slider 18 and a third traversing cylinder are mounted on the third traversing guide rail 15, the third traversing cylinder is configured for driving the third traversing slider 18 to slide on the third traversing guide rail 15, the fourth traversing guide rail 16 is mounted on the third traversing slider 18, and an extending direction of the fourth traversing guide rail 16 is perpendicular to an extending direction of the third traversing guide rail 15. A fourth traversing slider 19 and a fourth traversing cylinder are mounted on the fourth traversing guide rail 16, the fourth traversing cylinder is configured for driving the fourth traversing slider 19 to slide on the fourth traversing guide rail 16, and the rubberizing module 93 is mounted on the fourth traversing slider 19.

The telescopic ejector block 100 comprises a fixed block 98 and a movable block 99, one end of the movable block 99 is arranged inside the fixed block 98, a spring is provided between the movable block 99 and the fixed block 98, and the movable block 99 is movable inside the fixed block 98.

Further, in some embodiments, a plurality of rubberizing modules 93 are provided, the rubberizing modules 93 are distributed at intervals, and two adjacent rubberizing modules 93 are capable of being close to or far away from each other.

Specifically, the rubberizing module 93 further comprises a first connecting block 94 and a second connecting block 95, wherein the first connecting block 94 and the second connecting block 95 are both provided with an adjusting groove extending in a left-right direction, the first suction block 91 is mounted in the adjusting groove of the first connecting block 94 by a bolt, and the second suction block 92 is mounted in the adjusting groove of the second connecting block 95 by a bolt.

In the disclosure, two rubberizing modules 93 are provided. The first suction blocks 91 of the two rubberizing modules 93 are distributed at two ends of the first connecting block 94, and a distance between the two first suction blocks 91 may be adjusted left and right by loosening screws when needed. The second suction blocks 92 of the two rubberizing modules 93 are distributed at two ends of the second connecting block 95, and a distance between the two second suction blocks 92 may be adjusted left and right by loosening screws when needed. In this way, during rubberizing, the end cover may be pressed from two ends of the battery before rubberizing, so that the end cover is not easy to shift before rubberizing, with higher rubberizing efficiency.

In addition, both the first connecting block 94 and the second connecting block 95 are driven by a rubberizing module motor. During working, the rubberizing module motor is capable of driving the first connecting block 94 and the second connecting block 95 to be close to or far away from each other, so that the first suction block 91 and the second suction block 92 can be close to or far away from each other.

When the end cover is assembled onto the battery, the end cover is clamped and positioned by the auxiliary fixture 4, and one rubber strip is adsorbed between the first suction block 91 and the second suction block 92. The third traversing cylinder drives the third traversing slider 18 to slide on the third traversing guide rail 15, so that the telescopic ejector block 100, the first suction block 91 and the second suction block 92 are close to the assembled end cover and the battery. When the end cover is pressed against the movable block 99 of the telescopic ejector block 100, the movable block 99 may be pressed to retract into the fixed block 98, and a middle part of the rubber strip is pressed by the movable block 99 to stick to a side surface of the end cover. The rubber strip attached to the first suction block 91 and the second suction block 92 is driven by the first suction block 91 and the second suction block 92 to extend into a surface of the battery. When the movable block 99 is pressed in place, the rubberizing module motor drives the first suction block 91 and the second suction block 92 to be close to each other, so that the end cover and the battery are connected fixedly by the rubber strip.

With reference to FIG. 1 and FIG. 2, in some embodiments, a material ejection mechanism is provided below the material feeding mechanism 1, and the material ejection mechanism comprises a material ejection cylinder 80 and a material ejection rod 83. The material ejection cylinder 80 is configured for driving the material ejection rod 83 to ascend and descend, the material ejection rod 83 passes through the material feeding turntable 11 and extends into the material frame 10, and the material ejection rod 83 is configured for ejecting the end cover in the material frame 10.

Specifically, a second lifting guide rail 82 is mounted below the material feeding turntable 11, a second lifting slider 81 is slidably mounted on the second lifting guide rail 82, one end of the material ejection rod 83 is fixed on the second lifting slider 81, and the other end of the material ejection rod passes through the material feeding turntable 11 and extends into the material frame 10.

During working, every time the first clamping component 21 clamps one end cover in the material frame 10, the material ejection cylinder 80 may drive the material ejection rod 83 to eject the subsequent end cover, until the last end cover in the material frame 10 is ejected and taken out.

With reference to FIG. 1 and FIG. 2, both sides of the material frame 10 are provided with a sensing apparatus 9, the sensing apparatus 9 is electrically connected with the material ejection mechanism, and the sensing apparatus 9 is configured for detecting the end cover at a top portion of the material frame 10. When the first clamping component 21 clamps one end cover, the sensing apparatus 9 may sense that there is a lack of end cover at the top portion of the material frame 10, so that the sensing apparatus 9 may send a signal to the material ejection cylinder 80, so as to make the material ejection cylinder 80 drive the material ejection rod 83 to eject the subsequent end cover for supplementation.

It should be noted that the sensing apparatus 9 is a photoelectric inductive switch.

In addition, the disclosure further provides a battery end cover mounting method, which comprises:
clamping an end cover by a first clamping component 21, and transferring the end cover to an assembling mechanism 3 through a first transfer apparatus 20;
on the way of transferring the end cover to the assembling mechanism 3, rotating an assembly opening of the end cover to be aligned with a tab;
clamping the end cover by a second clamping component 31 of the assembling mechanism 3, and transferring the end cover to an assembly opening of the battery through a second transfer apparatus 30 for assembly;
driving a rubberizing module 93 of a rubberizing mechanism 5 by a third transfer apparatus 14 to be close to the assembled end cover and the battery, and making the end cover enter between a first suction block 91 and a second suction block 92, so that a telescopic ejector block 100 presses the end cover; and
making the telescopic ejector block 100 contract under a counter-acting force of the end cover, making the first suction block 91 and the second suction block 92 close to each other at the same time, and sticking a rubber strip between the end cover and the battery.

Specific operations are described hereinafter with reference to FIG. 1 to FIG. 6. The first traversing cylinder 202 drives the first traversing slider 201 to slide backwards, so that the first traversing slider 201 drives the first lifting guide rail 210 and the clamping jaw 213 to move to a position above the material frame 10. The first lifting cylinder 212 drives the first lifting slider 211 to slide downwards, so that the clamping jaw 213 is close to the end cover in the material frame 10. The pressing plate cylinder drives the pressing plate 22 to descend, so that the bending section 220 of the pressing plate 22 keeps the end cover in the material frame 10 horizontal, and then the clamping jaw cylinder 214 drives the clamping jaw 213 to clamp the end cover. The first traversing cylinder 202 drives the first traversing slider 201 to slide forward, and meanwhile, the driving apparatus 23 drives the clamping jaw 213 and the pressing plate 22 to jointly rotate to a horizontal position, so that the assembly opening of the end cover is rotated to a horizontal position. When the clamping jaw 213 carrying the end cover moves to a position above the transition mechanism 6, the first lifting cylinder 212 drives the first lifting slider 211 to descend, so that the end cover clamped by the clamping jaw 213 is put into the clamping groove 60, and then the clamping jaw cylinder 214 releases the clamping jaw 213. The second traversing cylinder 303 drives the second traversing slider 302 to move to the right, so that two gripping jaws 310 provided at an interval move to a position above the clamping groove 60, and then the second lifting cylinder 301 drives the two gripping jaws 310 to descend. The two gripping jaws 310 move closely to each other to clamp two ends of the end cover in the clamping groove 60, and then the second traversing cylinder 303 drives the second traversing slider 302 to slide forward, so that the two gripping jaws 310 clamp the end cover and move to the assembly opening of the battery for assembly. During assembly, the auxiliary fixture 4 clamps the tab to keep the tab stable, the auxiliary fixture 4 is withdrawn after the assembly is completed, and then the end cover and the battery are fixedly connected by the rubber strip through the rubberizing mechanism 5. Specific rubberizing steps have been described in detail above, and will not be repeated herein.

In addition, the disclosure further provides a battery production line, which mainly comprises a conveying line and the battery end cover mounting device according to any one of the embodiments described above. The conveying line is configured for conveying the battery, and the battery end cover mounting device according to any one of the embodiments described above is provided on the transfer path of the conveying line.

Certainly, the present application is not limited to the above embodiments. Those of ordinary skills in the art may further make various equivalent modifications or substitutions without violating the gist of the disclosure, and these equivalent modifications or substitutions are all included in the scope defined by the claims of the present application.

## Claims

1. A battery end cover mounting device, comprising:
a manipulator configured for grabbing an end cover and assembling the end cover on a battery; and
a rubberizing mechanism (5) provided on a transfer path of the battery, wherein the rubberizing mechanism (5) is configured for applying a rubber strip between the end cover and the battery which are assembled.

2. The battery end cover mounting device according to claim 1, wherein the manipulator comprises a material taking mechanism (2), the material taking mechanism (2) is provided with a first transfer apparatus (20) and a first clamping component (21), the first clamping component (21) is mounted on the first transfer apparatus (20), and the first clamping component (21) is configured for clamping the end cover.

3. The battery end cover mounting device according to claim 2, wherein the manipulator further comprises an assembling mechanism (3) provided at one side of the material taking mechanism (2), the assembling mechanism (3) is provided with a second transfer apparatus (30) and a second clamping component (31), the second clamping component (31) is mounted on the second transfer apparatus (30), and the second clamping component (31) is configured for assembling the end cover clamped by the first clamping component (21) onto the battery.

4. The battery end cover mounting device according to claim 1, wherein the rubberizing mechanism (5) comprises a third transfer apparatus (14), a rubberizing module (93) is provided on the third transfer apparatus (14), the rubberizing module (93) comprises a first suction block (91), a second suction block (92) and a telescopic ejector block (100), the telescopic ejector block (100) is provided between the first suction block (91) and the second suction block (92), and the first suction block (91) and the second suction block (92) are capable of being close to or far away from each other.

5. The battery end cover mounting device according to claim 4, wherein a plurality of rubberizing modules (93) are provided, the rubberizing modules (93) are distributed at intervals, and two adjacent rubberizing modules (93) are capable of being close to or far away from each other.

6. The battery end cover mounting device according to claim 2, wherein the first clamping component (21) is mounted on the first transfer apparatus (20) through a driving apparatus (23), and the first clamping component (21) is driven by the driving apparatus (23) to drive the end cover to rotate, so that an assembly opening of the end cover is aligned with a tab.

7. The battery end cover mounting device according to claim 2, wherein a pressing plate (22) is provided on the first clamping component (21), and the pressing plate (22) is configured for keeping the end cover horizontal before the first clamping component (21) clamps the end cover.

8. The battery end cover mounting device according to claim 2, further comprising a material feeding mechanism (1) provided at one side of the material taking mechanism (2), wherein a calibration mechanism (7) is provided between the material taking mechanism (2) and the material feeding mechanism (1), the calibration mechanism (7) comprises a driving component (70) and a calibration plate (71), the calibration plate (71) is mounted at a power output end of the driving component (70), and the driving component (70) drives the calibration plate (71), so that the calibration plate (71) pushes the material feeding mechanism (1) to be directly opposite to the material taking mechanism (2).

9. A battery production line, comprising a conveying line and the battery end cover mounting device according to any one of claims 1 to 8.

10. A battery end cover mounting method, comprising:
clamping an end cover by a first clamping component (21), and transferring the end cover to an assembling mechanism (3) through a first transfer apparatus (20);
on the way of transferring the end cover to the assembling mechanism (3), rotating an assembly opening of the end cover to face a tab;
clamping the end cover by a second clamping component (31) of the assembling mechanism (3), and transferring the end cover to an assembly opening of the battery through a second transfer apparatus (30) for assembly;
driving a rubberizing module (93) of a rubberizing mechanism (5) by a third transfer apparatus (14) to be close to the assembled end cover and the battery, and making the end cover and the battery jointly enter between a first suction block (91) and a second suction block (92), so that a telescopic ejector block (100) is in pressing contact with the end cover; and
making the telescopic ejector block (100) contract under a counter-acting force of the end cover, making the first suction block (91) and the second suction block (92) close to each other at the same time, and sticking a rubber strip between the end cover and the battery.
